# EUROPÄISCHE PATENTSCHRIFT

(11) **EP 3 039 402 B1**
(45) Veröffentlichungstag und Bekanntmachung des Hinweises auf die Patenterteilung: **04.10.2017**
(21) Anmeldenummer: 14761302.0
(22) Anmeldetag: 28.08.2014
(51) Int. Cl.: G01N 15/02, G01N 15/06, G01N 15/00

(54) **BETRIEBSMITTEL FÜR EINEN KONDENSATIONSKERNZÄHLER FÜR ABGASE VON VERBRENNUNGSMOTOREN**
DEVICE FOR A CONDENSATION NUCLEUS COUNTER FOR INTERNAL COMBUSTION ENGINE EXHAUST GASES
SUBSTANCE OPÉRATIONNELLE POUR COMPTEUR DE NOYAUX DE CONDENSATION POUR LES GAZ D'ÉCHAPPEMENT DE MOTEURS À COMBUSTION INTERNE

(30) Priorität: 30.08.2013 AT 505372013
(43) Veröffentlichungstag der Anmeldung: 06.07.2016
(73) Patentinhaber: AVL List GmbH, 8020 Graz (AT)
(72) Erfinder: KRAFT, Martin, A-1090 Wien (AT); BERGMANN, Alexander, A-8052 Graz (AT)
(74) Vertreter: Patentanwälte Pinter & Weiss OG
(86) Internationale Anmeldenummer: PCT/EP2014/068267
(87) Internationale Veröffentlichungsnummer: WO 2015/028553

(56) Entgegenhaltungen:
- US-A- 4 144 040
- US-B1- 6 469 781
- SMORODIN V Y ET AL: "Relationship of heterogeneous nucleation and condensational growth on aerosol nanoparticles", ATMOSPHERIC RESEARCH, ELSEVIER, AMSTERDAM, NL, vol. 82, no. 3-4, 1 December 2006 (2006-12-01), pages 591-604, XP024895222, ISSN: 0169-8095, DOI: 10.1016/J.ATMOSRES.2006.02.015 [retrieved on 2006-12-01]
- Rashid Mavliev ET AL: "Experimental Studies of Heterogeneous Nucleation in the Turbulent Mixing Condensation Nuclei Counter", Journal of Physical Chemistry Part B: Condensed Matter, Materials, Surfaces, Interfaces & Biophysical, vol. 108, no. 14, 1 April 2004 (2004-04-01), pages 4558-4564, XP055351005, US ISSN: 1520-6106, DOI: 10.1021/jp0362537
- Doh-Won Lee ET AL: "Comparison of Experimental and Theoretical Heterogeneous Nucleation on Ultrafine Carbon Particles", Journal of Physical Chemistry Part B: Condensed Matter, Materials, Surfaces, Interfaces & Biophysical, vol. 107, no. 50, 1 December 2003 (2003-12-01), pages 13813-13822, XP055351007, US ISSN: 1520-6106, DOI: 10.1021/jp0278216

## Beschreibung

Die gegenständliche Erfindung betrifft Betriebsmittel für einen Kondensationskernzähler für Abgase von Verbrennungsmotoren und einen Kondensationskernzähler mit einem erfindungsgemäßen Betriebsmittel.

Abgase eines Verbrennungsmotors beinhalten Feststoffpartikel im nm-Bereich, die zu klein sind, um diese direkt auf optischem Weg detektieren zu können. Um solche Feststoffpartikel doch messbar zu machen werden häufig sogenannte Kondensationskernzähler verwendet, bei denen das Abgas durch eine übersättigte Atmosphäre geschickt wird. Die übersättigte Atmosphäre wird z.B. erzeugt, in dem das Abgas mit Dämpfen eines Betriebsmittels gesättigt wird und anschließend abgekühlt wird. Die Feststoffpartikel dienen dann als Kondensationskerne, auf die das übersättigte Betriebsmittel aufkondensiert, was zu einem Anwachsen der Kondensationskerne führt. Ein solcher Kondensationskernzähler ist z.B. aus der US 4,790,650 A oder der WO 12/142297 A1 oder dem Dokument "Model 3025A Ultrafine Condensation Particle Counter", 1. Januar 1999, Technique et Science Informatiques, L'Afcet Paris, ISSN: 0752-4072 bekannt. Die Größe der Feststoffpartikel, ab der dieser Kondensationsprozess stattfindet ist von der Übersättigung abhängig und wird als Kelvin-Durchmesser bezeichnet. Je kleiner der Kelvindurchmesser für eine bestimmte Übersättigung, desto kleiner können die Feststoffpartikel sein, die zur Kondensation von Betriebsmittel führt. Entsprechend von Vorgaben, z.B. gesetzlichen Anforderungen, ist für Abgas der Partikelgrößenbereich von größer 20nm, typischerweise 23nm, bis 2.5µm zu detektieren und das Abgas auf eine Temperatur von <35°C vor dem Sättiger zu konditionieren. Durch die Kondensation steigt die Größe der Partikel an (auf ca. 5 µm), die dann einzeln optisch detektiert werden können, z.B. mit optischen Partikelzählern auf Basis von Streulicht. Für die Detektion und Zählung einzelner Partikel müssen diese eine ausreichende Größe im µm-Bereich aufweisen.

In der US 6,469,781 B1 ist die Detektion von Molekülen, die in geringsten Konzentrationen (<100ppb) in einem Gas enthalten sind, beschrieben. Um diese Moleküle detektierbar zu machen, werden diese zuerst mit Licht bestrahlt, um eine photochemische Reaktion auszulösen, die dazu führt, dass die Moleküle Cluster bilden. Das Gas mit den Molekülclustern wird dann einem Kondensationskernzähler zugeführt, in dem die mit Betriebsmittel aufgewachsenen Molekülcluster gezählt werden, um das Vorhandensein von Molekülen zu erkennen. Einzelne Moleküle können damit nicht gezählt werden, da diese in einen Zwischenschritt zu Molekülclustern verbunden wurden. Das beschriebene Verfahren ist damit ungeeignet, um einzelne, in einem Abgas enthaltene Rußpartikel zu zählen.

Das derzeitige Standard-Betriebsmittel für Kondensationskernzähler für die Messung von Feststoffpartikeln in Abgasen von Verbrennungsmotoren ist 1-Butanol (n-Butanol), wie z.B. in EP 2 208 983 B1 beschrieben. Der primäre Nachteil dieses Betriebsmittels ist seine chemische Reaktivität mit dem Abgas. Der Alkohol bildet mit sauren Abgaskomponenten Ester, die sich in Folge in den Dochtelementen des Kondensationskernzählers anreichern und zu einer Reduktion der Gassättigung führen. Ein weiterer praktischer Nachteil ist ein Flammpunkt von ∼ 37°C, also im Bereich der angestrebten Temperatur.

In der US 4,144,040 A ist ein Kondensationskernzähler zur Messung einer Partikelkonzentration beschrieben, der Wasser als Betriebsmittel verwendet.

In WO 01/31312 A1 wurden eine Fülle von möglichen Betriebsmittel für einen Kondensationskernzähler untersucht, wobei das Hauptaugenmerk hierbei auf die Detektion von sehr kleinen Molekülen (kleiner als 3nm) für die chemische Analyse von chemischen Stoffen gerichtet ist. Um hier möglichst kleine Nachweisgrenzen zu erreichen, ist das System auf möglichst kleine Kelvin-Durchmesser ausgerichtet. Ruß oder sonstige Abgaspartikel, die deutlich größer sind, als die in der WO 01/31312 A1 untersuchten Moleküle, spielen hier keine Rolle. Dabei wird ausgeführt, dass Glykol für solche Anwendungen das geeignetste Betriebsmittel ist, da es den kleinsten Kelvindurchmesser ermöglicht. Daneben werden noch, neben einer Vielzahl weiterer prinzipiell denkbarer chemischer Substanzen, Alkane, und speziell Hexan, Heptan, Oktan und Nonan als Betriebsmittel, erwähnt, die aber allesamt schlechtere Kelvindurchmesser ermöglichen und daher in der WO 01/31312 A1 nicht als bevorzugte Betriebsmittel für diese Anwendungen beschrieben sind.

Die WO 01/31312 A1 beschreibt weiters eine Methode, wie ein Betriebsmittel aus einer Gruppe chemischer Stoffe (z.B. Alkane) als das am besten geeignete Betriebsmittel ausgewählt werden kann. Dazu soll die relative Dielektrizitätskonstante εᵣ des Betriebsmittels herangezogen werden und das Betriebsmittel in der chemischen Gruppe gewählt werden, das die größte Dielektrizitätskonstante aufweist. Die relative Dielektrizitätskonstante ist dabei ein Parameter der zu den einzelnen Stoffen bekannt ist, z.B. aus entsprechenden Tabellen oder Spezifikationen. Auch nach diesem Kriterium werden Alkane gemäß WO 01/31312 A1 als am wenigsten geeignete Betriebsmittel eingestuft, da ihre relative Dielektrizitätskonstante mit εᵣ∼2 um mehr als eine Größenordnung geringer ist als die der präferierten Betriebsmittel Glykol (εᵣ ∼ 41) bzw. Glycerin (εᵣ ∼ 47).

Eine im Bereich der Atmosphärenforschung verwendete Alternative ist die Verwendung von Wasser als Betriebsmittel (siehe z.B. auch WO 01/31312 A1). Für den gegenständlichen Anwendungsfall bei Abgasen von Verbrennungsmotoren ist Wasser aber nicht anwendbar, da Wasser nicht ausreichend zuverlässig auf Rußpartikel im Abgas aufwächst. Daneben würde Wasser in Folge der hohen Diffusivität von Wasserdampf in Luft einen grundlegend anderen Systemaufbau notwendig machen, womit Wasser in herkömmlichen Kondensationskernzählern für Abgas nicht einsetzbar ist. Somit stellt Wasser als Betriebsmittel für den gegenständlichen Anwendungsfall keine sinnvolle Alternative dar.

Aus der US 7,777,867 B2 ist z.B. die Verwendung perfluorierten Verbindungen, insbesondere von Perfluoro-N-trialkylaminen (z.B. Perfluoro-N-tributylamin, Fluorintert FC-43) als Betriebsmittel für einen Kondensationskernzähler bekannt. Vorteile dieser Betriebsmittel sind die exzellente chemische Inertanz und die Nicht-Brennbarkeit. Nachteilig bei diesen Betriebsmitteln ist allerdings die hohe Dichte, durch die eine Förderung (und entsprechende Gassättigung) in Kondensationskernzähler bestimmter Ausführung, z.B. mit einem vertikalen Dochtelement, nicht möglich ist, was diese Verbindung nur beschränkt einsetzbar macht. Außerdem sind perfluorierte Verbindungen teuer und auch potentiell umweltschädlich, was das Handling solcher Verbindungen aufwendig macht.

Smorodin und Hopke (V.Y. Smorodin und P.K.Hopke : "Relationship of heterogeneous nucleation and condensational growth on aerosol nanoparticles",ATMOSPHERIC RESEARCH, ELSEVIER, AMSTERDAM, NL, Bd. 82, Nr. 3-4, 1. Dezember 2006, Seiten 591-604) gibt zwar an, dass andere Dodekan in einem Kondensationskernzähler verwendet hätten, tatsächlich ist dies aber nicht der Fall: In den beiden zitierten Referenzen (R. Mavliev et al: "Experimental Studies of Heterogeneous Nucleation in the Turbulent Mixing Condensation Nuclei Counter",Journal of Physical Chemistry Part B: Condensed Matter, Materials, Surfaces, Interfaces & Biophysical, Bd. 108, Nr. 14, 1. April 2004, Seiten 4558-4564, sowie D.-W. Lee et al.: "Comparison of Experimental and Theoretical Heterogeneous Nucleation on Ultrafine Carbon Particles",Journal of Physical Chemistry Part B: Condensed Matter, Materials, Surfaces, Interfaces & Biophysical, Bd. 107, Nr. 50, 1. Dezember 2003 (2003-12-01), Seiten 13813-13822) werden lediglich Dibutyphthlat, Octadecan, Octadecanol und Octadecanolsäure als Betriebsmittel für einen Kondensationskernzähler verwendet.

Die RU 2 237 882 C1 beschreibt ein Verfahren zur Bestimmung der Partikelkonzentration von Aromaten in einem Gas mittels eines Nephelometers, bei dem die Aromate zuerst mittels Ozon zu Kondensationskernen umgewandelt werden, die anschließend unter Verwendung von Tetradekan oder Heptadekan als Betriebsmittel durch Kondensation zu Partikeln vergrößert werden. Die darin beschriebenen Tetradekan und Heptadekan sind als Betriebsmittel für einen Kondensationskernzähler für die Partikelmessung in Abgasen von Verbrennungsmotoren allerdings ungeeignet, da diese im angestrebten Betriebstemperaturbereich einen um zumindest eine Größenordnung zu geringen Dampfdruck aufweisen, um eine, für die ordnungsgemäße Funktion erforderliche, ausreichend mit Betriebsmittel ge- bzw. übersättigte Atmosphäre zu realisieren. Eine Erhöhung der Betriebstemperatur zur Erreichung einer ausreichenden Sättigung wäre zwar technisch möglich, aber würde aber erstens nicht den gesetzlichen und normativen Vorgaben derartiger Geräte zur Partikelmessung in Abgasen von Verbrennungsmotoren entsprechend und zweitens wären Betriebstemperaturen im Bereich der Flammpunkte der jeweiligen Substanzen erforderlich, was ein hohes Sicherheitsrisiko darstellen würde. Abgesehen davon sind diese Alkane im Betriebstemperaturbereich des Kondensationskernzählers fest oder nicht ausreichend niedrig viskos, was deren Verwendung für die angestrebte Anwendung ebenfalls ausschließt.

Es ist daher eine Aufgabe der gegenständlichen Erfindung ein geeignetes Betriebsmittel für einen Kondensationskernzähler für Abgase von Verbrennungsmotoren anzugeben.

Diese Aufgabe wird durch die Verwendung von n-Alkan mit der allgemeinen chemischen Formel CₙH₂ₙ₊₂ mit einer Ordnungszahl n von zehn, elf oder zwölf als Betriebsmittel gelöst.

In der WO 01/31312 A1 weisen die n-Alkane mit der Ordnungszahl n von sechs (Hexan) bis neun (Nonan) im Vergleich mit den anderen genannten Betriebsmittel die schlechtesten Eigenschaften auf und innerhalb der Gruppe der Alkane, solche mit höherer Ordnungszahl schlechtere Eigenschaften, z.B. einen größeren Kelvindurchmesser, als Alkane mit niedrigerer Ordnungszahl. Die in der WO 01/31312 A1 vorgeschlagene Methode zur Auswahl des Betriebsmittels scheitert allerdings insbesondere für Alkane, da die verschiedenen Alkane sehr ähnliche Dielektrizitätskonstanten aufweisen, was eine sichere Auswahl auf Basis dieses Kriteriums unmöglich macht. Wenn man das angegebene Kriterium trotzdem auf die Gruppe der Alkane anwendet, dann würde man als bevorzugtes Betriebsmittel z.B. Cyclohexan mit einer relativen Dielektrizitätskonstanten von 2,024 den n-Alkanen mit darunter liegenden relativen Dielektrizitätskonstanten vorziehen.

Überraschenderweise sind aber n-Alkane mit der Ordnungszahl n von zehn (Dekan, H₁₀C₂₂), elf (Undekan, C₁₁H₂₄) und zwölf (Dodekan, C₁₂H₂₆) speziell für Abgase von Verbrennungsmotoren aber am besten geeignet, was aufgrund der Offenbarung der WO 01/31312 A1 nicht absehbar war. Der Grund dafür wird darin gesehen, dass Alkane mit der Ordnungszahl zehn (Dekan), elf (Undekan) und zwölf (Dodekan) bei den angestrebten Betriebstemperaturen des Kondensationskernzähler, typischerweise -20°C bis 50°C, flüssig sind und gegenüber den Abgaskomponenten, insbesondere gegenüber organischen Säuren, Wasser, etc., im Wesentlichen unreaktiv sind und keine chemische Reaktion mit Abgasbestandteilen, z.B. Veresterungen, etc., eingehen. Weiters mischen sich Alkane generell nicht mit Wasser, z.B. in Form von Kondensat im Abgas, was die Verunreinigung des Betriebsmittels verhindert bzw. zumindest vermindert. Daneben haben solche Alkane bei Raumtemperatur einen ausreichend hohen Flammpunkt, um die Bildung von zünd- bzw. explosionsfähigen Alkan-Luftgemischen bei Raumtemperatur zu verhindern, was aufwändige Sicherheits- bzw. Explosionsschutzmaßnahmen notwendig machen würde. Weiters kommt es bei diesen Alkanen im angestrebten Betriebstemperaturbereich von -20°C bis 50°C zu keinen Phasenübergängen, z.B. flüssig - gasförmig. Darüber hinaus ist die Toxizität von solchen Alkanen niedriger als die Toxizität der verwendeten Treibstoffe im Verbrennungsmotor, womit das Handling des Betriebsmittels vereinfacht werden kann. Und nicht zuletzt weisen diese Alkane auch einen ausreichend hohen Dampfdruck auf, um das Aufwachsen zu ermöglichen und stellen somit auch das zuverlässige Aufkondensieren auf Abgasfeststoffpartikeln, insbesondere Ruß, sicher.

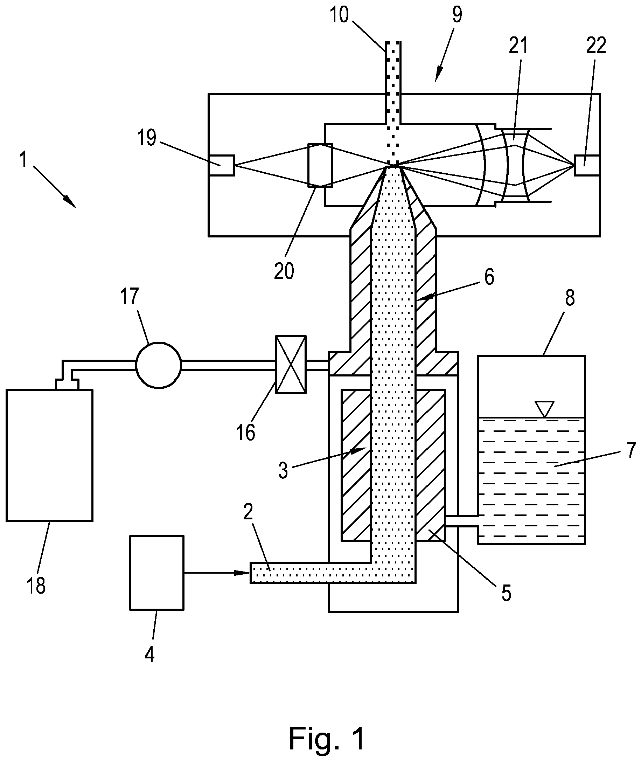

Die gegenständliche Erfindung wird nachfolgend unter Bezugnahme auf die Figuren 1 näher erläutert, die beispielhaft, schematisch und nicht einschränkend einen Kondensationskernzähler für Abgase von Verbrennungsmotoren zeigt.

Die Figur 1 zeigt schematisch einen Kondensationskernzähler 1 mit einer Zuleitung 2 für Abgas eines Verbrennungsmotors 4, das z.B. aus dem Auspuff des Verbrennungsmotors 4 entnommen wird. Das Abgas kann dabei auch verdünntes Abgas sein. Das Abgas gelangt in eine temperierte Sättigungseinheit 3, vorzugsweise im Betriebstemperaturbereich von -20°C bis 50°C temperiert, das z.B. ein poröses Sättigungselement 5 umfasst, dem flüssiges Betriebsmittel 7 aus einem Betriebsmittelreservoir 8 zugeführt wird. Das Abgas durchströmt das Sättigungselement 5 und wird dabei durch das Betriebsmittel 7 befeuchtet. Über die Temperatur in der Sättigungseinheit 3, und gegebenenfalls die Temperaturdifferenz zur nachfolgenden kühleren Kondensationseinheit 6, kann der (Über-)Sättigungsgrad des Betriebsmittels 7 im Abgas, und damit die erreichbare Größe der vergrößerten Partikel, eingestellt werden. In der nachfolgenden Kondensationseinheit 6, die durch geeignete Kühlmittel gekühlt ist, kondensiert das Betriebsmittel 7 im Abgas auf die im Abgas enthaltenen Feststoffpartikel auf. Die derart vergrößerten Partikel, vorzugsweise im µm-Bereich, können dann in einem Partikelzähler 9 gezählt werden. Über eine Ableitung 10 wird das Abgas wieder abgeleitet.

Aus der gekühlten Kondensationseinheit 6 wird über ein Filter 16 und eine Pumpe 17 Wasser in einen Aufnahmebehälter 18 rückgeführt. Allfällig abtropfendes Betriebsmittel 7 gelangt direkt wieder in die Sättigungseinheit 3 zurück

Der Partikelzähler 9 umfasst hier eine Laserdiode 19, deren Licht über eine Fokussiereinheit 20 auf die Austrittsstelle des partikelbeladenen, mit Betriebsmittel übersättigten Abgasstromes fokussiert und über einen Kollektor 21 gesammelt einem Detektor 22 zugeführt wird. Damit kann jedes einzelne, an der Austrittsstelle austretende Partikel festgestellt und gezählt und damit die Gesamtkonzentration der Partikel im Abgas detektiert werden.

Als Betriebsmittel 7 kommt hier Dekan (C₁₀H₂₂), Undekan (C₁₁H₂₄) oder Dodekan (C₁₂H₂₆) zum Einsatz, oder entsprechende binäre oder ternäre Gemische aus Dekan (C₁₀H₂₂), Undekan (C₁₁H₂₄) oder Dodekan (C₁₂H₂₆).

## Patentansprüche

1. Verwendung von n-Alkan mit der allgemeinen chemischen Formel CₙH₂ₙ₊₂ mit einer Ordnungszahl n von zehn, elf oder zwölf als Betriebsmittel (7) für einen Kondensatiönskernzähler (1) für Abgase von Verbrennungsmotoren (4), das Feststoffpartikel in Form von Ruß enthält, mit dem einzelne, im Abgas enthaltene Rußpartikel gezählt werden.

2. Verwendung nach Anspruch 1, **dadurch gekennzeichnet, dass** als Betriebsmittel (7) ein binäres Gemisch von n-Alkanen mit einer Ordnungszahl n von zehn, elf oder zwölf verwendet wird.

3. Verwendung nach Anspruch 1, **dadurch gekennzeichnet, dass** als Betriebsmittel (7) ein ternäres Gemisch von n-Alkanen mit einer Ordnungszahl n von zehn, elf oder zwölf verwendet wird.

4. Kondensationskernzähler mit einem n-Alkan mit der allgemeinen chemischen Formel CₙH₂ₙ₊₂ mit einer Ordnungszahl n von zehn, elf oder zwölf als Betriebsmittel (7).

5. Kondensationskernzähler nach Anspruch 4 mit einem binären oder ternären Gemisch von n-Alkanen mit einer Ordnungszahl n von zehn, elf oder zwölf als Betriebsmittel.

## Claims

1. Use of n-alkane with the general chemical formula CₙH₂ₙ₊₂ with an ordinal number n of ten, eleven or twelve as operating medium (7) for a condensation nucleus counter (1) for exhaust gases from internal combustion engines (4) containing solid particles in the form of soot, by which single soot particles contained in the exhaust gas are counted.

2. Use according to claim 1, **characterized in that** a binary mixture of n-alkanes with an ordinal number n of ten, eleven or twelve is used as operating medium (7).

3. Use according to claim 1, **characterized in that** a ternary mixture of n-alkanes with an ordinal number n of ten, eleven or twelve is used as operating medium (7).

4. Condensation nucleus counter with an n-alkane with the general chemical formula CₙH₂ₙ₊₂ with an ordinal number n of ten, eleven or twelve as operating medium (7).

5. Condensation nucleus counter according to claim 4, with a binary or ternary mixture of n-alkanes with an ordinal number n of ten, eleven or twelve as operating medium.

## Revendications

1. Utilisation de n-alcane de formule chimique générale CₙH₂ₙ₊₂ d'un nombre atomique n de dix, onze ou douze comme carburant (7) pour un compteur de noyaux de condensation (1) pour gaz d'échappement de moteurs à combustion interne (4), qui contient des particules solides sous forme de suie, avec lequel des particules de suie individuelles contenues dans les gaz d'échappement sont comptées.

2. Utilisation selon la revendication 1, **caractérisée en ce que** l'on utilise comme carburant (7) un mélange binaire de n-alcanes avec un nombre atomique n de dix, onze ou douze.

3. Utilisation selon la revendication 1, **caractérisée en ce que** l'on utilise comme carburant (7) un mélange ternaire de n-alcanes avec un nombre atomique n de dix, onze ou douze.

4. Compteur de noyaux de condensation avec un n-alcane de formule chimique générale CₙH₂ₙ₊₂ avec un nombre atomique n de dix, onze ou douze comme carburant (7).

5. Compteur de noyaux de condensation selon la revendication 4 avec un mélange binaire ou ternaire de n-alcanes avec un nombre atomique n de dix, onze ou douze comme carburant.
